# NEW EUROPEAN PATENT SPECIFICATION

(11) **EP 2 491 089 B2**
(45) Date of publication and mention of the opposition decision: **01.02.2023**
(45) Mention of the grant of the patent: 11.07.2018
(21) Application number: 09850675.1
(22) Date of filing: 23.10.2009
(51) Int. Cl.: F16D 69/02

(54) **FRICTION MATERIAL FOR BRAKES**
REIBUNGSMATERIAL FÜR BREMSEN
MATERIAU DE FROTTEMENT POUR FREINS FRICTION

(43) Date of publication of application: 29.08.2012
(73) Proprietor: Federal-Mogul Products US LLC, Southfield, MI 48034 (US)
(72) Inventor: SUBRAMANIAN, Vijay, Murfreesboro TN 37130 (US)
(74) Representative: Finnegan Europe LLP
(86) International application number: PCT/US2009/061818
(87) International publication number: WO 2011/049576

(56) References cited:
- EP-A1- 1 482 203
- EP-A1- 1 681 489
- EP-A2- 1 528 280
- GB-A- 2 305 433
- US-A- 4 384 054
- US-A- 4 477 605
- US-A- 5 087 642
- US-A- 5 339 931
- US-A- 5 856 278
- US-A1- 2005 004 258
- US-A1- 2007 142 500
- US-A1- 2007 142 500
- US-B1- 6 372 817

## Description

### FIELD OF THE INVENTION

The present invention relates to a non-asbestos friction materials and in particular to a friction material for a brake pad to be used for brakes of vehicles or industrial machines.

### BACKGROUND OF THE INVENTION

Copper in non-asbestos-based friction materials provides many useful properties and performance characteristics including excellent reinforcing strength, increased friction coefficient at high temperatures and excellent heat transfer properties. In addition, copper provides many other qualities that which increases the longevity of the friction material and the components the friction material engages as well as reduces brake dust. Steel fibers are sometimes used in place of some of the copper, but do not have many of the positive attributes of copper and are more frictionally aggressive, thereby increasing the amount of wear on the rotor against which the friction material engages. Steel fibers also generate dust that can quickly and permanently stain the surface finish of the rims of a vehicle.

The present invention is directed to a non-asbestos friction material that is free of copper and copper alloys. The inventive compositions are unique in that they provide the same level of friction, pad life, noise and other performance characteristics of a typical non-asbestos NAO or that uses copper based materials, while employing neither of copper nor copper-containing materials. The compositions provide a family of outstanding friction materials that possess the desirable performance attributes of a copper-containing friction material, but without the use of copper or copper alloys.

Another material commonly used in non- asbestos brake pads are titanates. Titanates are commonly used because titanates provide unique high temperature stability that is comparable to asbestos type materials. Titanate materials, available in hexatitanate and octatitanate forms also are useful since they coat the rotor surface with a uniform and consistent transfer layer. EP1482203 discloses a friction material containing a fibrous base, a binder and a filler comprising three types of metal oxide.

### SUMMARY OF THE INVENTION

The present invention is directed to a non-asbestos friction material that is free of copper and titanate. The inventive compositions are unique in that they provide the same level of friction, pad life, noise and other performance characteristics of a typical NAO non-asbestos (or NAO) that uses copper and titanate based materials, while employing neither of copper nor copper containing materials nor titanate compounds. The compositions provide a family of outstanding friction materials that possess the desirable performance attributes of a copper and titanate containing material, but without the use of copper and titanate.

According to a first aspect of the invention, there is provided a friction material for a brake consisting of:, in percent (%) by volume of said friction material:
a binder forming 15% - 24% by volume, wherein the binder is selected from at least one phenolic resin;
a fiber forming 3% - 13% by volume, wherein the fiber is chosen from a group of aramid, polyacrylonitrile (PAN) and cellulose fibers;
at least one lubricant forming less than or equal to 4% by volume, said lubricant including at least one metal sulfide, the metal sulfide is selected from at least one of tin sulfides,
antimony trisulfide, zinc sulfide, copper sulfide, iron sulfides, wherein said lubricant may further comprise one or more of the group consisting of antimony trioxide, phthalocyanine, tin powder, and zinc powder;
abrasives forming 9% - 22 % by volume, wherein said abrasives include 3-14% by volume of said material hard abrasives and 3-14% mild abrasives, and wherein said abrasives are selected from the group consisting of hard mineral fibers, zirconia, zircon, zirconium silicate, mica, alumina, ceramic fibers, calcium magnesium silicate, calcium magnesium zirconium
silicate, calcium magnesium aluminum silicate, magnesium aluminum silicate, silica, silicon dioxide, sand, silicon carbide, iron oxide and magnesium oxide;
other materials, namely fillers and/or modifiers forming 46% - 64% by volume and including, as a filler, a rubber powder, further comprising at least one of the group consisting of lime, calcium oxide, talc, calcium carbonate, barites, carbons such as graphite and petroleum coke, recycled rubber crumbs, and friction dust;
and wherein said material is free of titanates and copper.

### BRIEF DESCRIPTION OF THE DRAWINGS

The present invention will become more fully understood from the accompanying detailed description, claims, and the drawing in which:

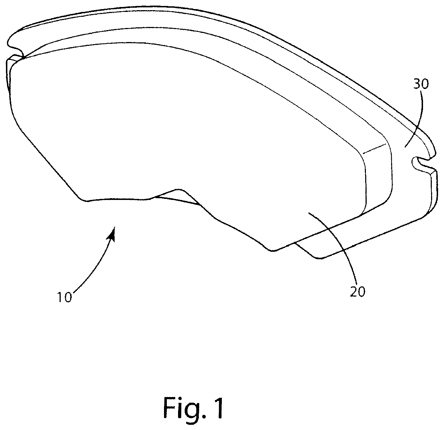

FIG. 1 is a perspective view of an exemplary friction material incorporated into an exemplary brake pad.

### DETAILED DESCRIPTION OF THE PREFERRED EMBODIMENT

Disclosed is a non-asbestos friction material for brake pads and other brake materials that includes at least one binder, at least one fiber, at least one lubricant, at least one abrasive and which is substantially free of asbestos titanates and copper or alloys of copper such as brass and bronze.

The friction material 20 may be used in the exemplary brake pad 10 illustrated in FIG. 1. The brake pad 10 illustrated in FIG. 1 is only an exemplary brake pad and may take on any size, shape or configuration. The friction material 20 when used in a brake pad 10 is typically bonded or otherwise secured to a backing plate 30.

While some prior efforts have been made to try to at least partially remove copper or copper compounds and certain grades of titanates from friction pad compositions, it has not been known to be successful without sacrificing desirable performance characteristics including stopping capability, longevity, minimal rotor wear, minimal brake dust, and minimal staining of vehicle rims.

By substantially free of titanates, it is meant to be substantially free of compounds like potassium titanate, magnesium potassium titanate, lithium potassium titanate, calcium potassium titanate, and other hexa and octa-titanates and other titanates developed as asbestos alternatives.

The non-asbestos friction material of the invention includes at least one binder which comprises a phenolic resin of either straight or modified phenolic resin form. Examples of modified binders include silicone, acrylic, epoxy, and nitrile. The binder makes up 15-24% by volume of the total composition. The binder serves as a matrix that holds the other ingredients together in the friction material.

The at least one fiber makes up 3-13% by volume of the total friction material composition. The fibers may be chosen from aramid fibers, poly acrylonitrile (PAN) fibers, and cellulose fibers. Aramid fibers preferably have an average length of 1.09 mm with an approximate range of 0.92 mm to 1.26 mm. PAN fibers have a length range of about 5.0 to 7.5 mm. Cellulose fibers have a length less than 1 mm. The fibers provide integrity and structural strength to the friction material. Fibers also help with stability of pre-cured preforms during the manufacturing process. Various fibers and fiber lengths can thus be used to control manufacturing and performance characteristics of the friction material. The fibers can be synthetic or natural in origin, and pure or recycled in form.

The at least one lubricant is included in the friction material to reduce pad and disc wear during service. The at least one lubricant makes up less than or equal to 4% by volume of the total friction material composition.

The friction material further includes abrasives, including hard and mild abrasives. The abrasives form 9-22% by volume of the final friction material composition, wherein said abrasives are selected from the group consisting of hard mineral fibers, zirconia, zircon, zirconium silicate, mica, alumina, ceramic fibers, calcium magnesium silicate, calcium magnesium zirconium silicate, calcium magnesium aluminum silicate, magnesium aluminum silicate, silica, silicon dioxide, sand, silicon carbide, iron oxide and magnesium oxide. The hard abrasives form 3-14% while the mild abrasives form 3-14% by volume of the final friction material composition. Examples of hard abrasives include hard mineral fibers, zirconia, alumina, magnesium oxide, zirconium silicate, silica, silicon dioxide, sand, silicon carbide, and iron oxide. Hard abrasives tend to have higher values on the Mohs hardness scale. Abrasives that are mild in nature include iron oxides of different chemistries, other metallic oxides, and materials and minerals that have relatively lower values on the Mohs hardness scale. The hard abrasives are generally used in low concentrations while the mild abrasives are typically used in higher concentrations to achieve the same desired friction level.

The other ingredients included in the friction material form the balance of the composition and are classified generally as fillers and/or modifiers. The other ingredients make up 46-64% of the total composition of the friction material, including, as a filler, a rubber powder, further comprising at least one of the group consisting of lime, calcium oxide, talc, calcium carbonate, barites, carbons such as graphite and petroleum coke, recycled rubber crumbs, and friction dust. The other ingredients generally provide bulk to the formulation, reduce cost, provide noise reduction and help with coating the rotor surface with a uniform transfer layer.

The following tables provide exemplary friction materials prepared using the present invention that have sufficient performance characteristics. Each of the examples is evaluated for certain manufacturing characteristics including mixing, preforming, pressing, physical hardness, physical compression, bonding to back plate at room temperature, bonding to back plate at 300°C; as well as certain performance characteristics including friction pad life, pad wear, rotor wear characteristics and costs. All compositions described below are expressed in volume % and have been rounded off to the nearest whole number for simplicity.

The friction materials of the Examples were processed and formed by mixing, pressing and curing operations typically used in the industry to make brake pad friction materials. This involves dry tumble mixing the ingredients with optional use of plows and choppers to blend the ingredients into a homogeneous mixture. The mix is pressed into performs or pucks using a room temperature press operation. The pucks are then placed into a hot mold with a metal backplate on one side and hot press cured to bond the cured friction material to the backing plate to form the final brake pad. Samples for testing pads bound for market would further undergo a post bake operation as well as one or more finishing operations before being packaged for commercial sale. The samples of Examples 1-13 were post baked. Variations in the process may include loose filling the mix into the pressing mold directly or by use of a liquid binder system. The friction material may be attached directly to the backplate or with use of an underlayer material, as is well known in the industry.

### EXAMPLE 1

| | |
|---|---|
| Binder | 21 |
| Fiber | 7 |
| Lubricant | 4 |
| Total Abrasives | 15 |
| Fillers | 53 |
| Copper and Copper alloys | 0 |
| Titanates | 0 |
| Total | 100 |

The ingredients of Example 1 were blended in a standard tumble mixer for approximately 7 minutes and then performs were made and hot press cured to a metal booking and then post-cured as described above. The friction material of Example 1 was found to have good all-around manufacturing and performance characteristics comparable to friction formulations containing copper or copper alloys and titanates included in them. The remaining examples were made by the same process as Example 1.

### EXAMPLE 2

| | |
|---|---|
| Binder | 15 |
| Fiber | 7 |
| Lubricant | 4 |
| Total Abrasives | 15 |
| Fillers | 59 |
| Copper and Copper alloys | 0 |
| Titanates | 0 |
| Total | 100 |

The final friction composition of Example 2 had generally good performance characteristics although the preforming and bonding to the back plate at 300°C characteristics were not as good as the friction material in mixture Example 1. It is believed that the binder at 15% by volume or lower detracts from the bonding characteristics of the friction material and in particular, bonding the friction material to the back plate at 300°C.

### EXAMPLE 3

| | |
|---|---|
| Binder | 24 |
| Fiber | 7 |
| Lubricant | 4 |
| Total Abrasives | 15 |
| Fillers | 50 |
| Copper and Copper alloys | 0 |
| Titanates | 0 |
| Total | 100 |

Some variations in Example 3 as compared to Example 1 include extremely low void volumes in the pad. Generally a very desirable characteristics for brake pads is that the noise levels be low since the noise from braking is a common cause of customer complaints related to braking systems. Low level voids also correlate to very stiff pads with very low compressibility values. This material showed the lowest compressibility properties of all the examples tested, demonstrating that the high resin binder level affects this property. As opposed to Example 2, the bonding to the back plate both at room temperature and at 300°C was excellent, and very low press pressures were required to get acceptable pad integrities, but due to the low compressibility and in particular the low voids potentially causing noise, a binder level above 24% by volume of the friction material would be undesirable. Therefore, it is believed that 24% of binder by volume is the maximum level of binder that may be used in a volume percent of the final friction composition.

### EXAMPLE 4

| | |
|---|---|
| Binder | 21 |
| Fiber | 3 |
| Lubricant | 4 |
| Total Abrasives | 15 |
| Fillers | 57 |
| Copper and Copper alloys | 0 |
| Titanates | 0 |
| Total | 100 |

Example 4 reduces the fiber content to 2% by volume. In comparison to the friction material of Example 1, the pad was difficult to preform and had low physical compression as well and was somewhat difficult to bind to the back plate at 300°C. The cured friction material was unacceptably brittle. Therefore, the pads should include more than 3% and preferably 5% or more by volume fiber to provide acceptable performance characteristics.

### EXAMPLE 5

| | |
|---|---|
| Binder | 21 |
| Fiber | 13 |
| Lubricant | 4 |
| Total Abrasives | 15 |
| Fillers | 47 |
| Copper and Copper alloys | 0 |
| Titanates | 0 |
| Total | 100 |

The material of Example 5 employed a high level of fiber which produced good performance characteristics but some process difficulties. During processing, the high level of fiber made this material difficult to mix, but dividing the mix into smaller batches helped. However, smaller batches would significantly increase the cost of manufacturing of the material and thus would be undesirable. Therefore, the friction material should have less than 13% by volume of fibers in the total composition and more particularly, approximately 5-9% by volume of the total composition.

### EXAMPLE 6 (not according to the invention)

| | |
|---|---|
| Binder | 21 |
| Fiber | 7 |
| Lubricant | 0 |
| Total Abrasives | 15 |
| Fillers | 57 |
| Copper and Copper alloys | 0 |
| Titanates | 0 |
| Total | 100 |

Example 6 had generally good all-around characteristics. However, the preforming and pressing of the processing stage were negatively affected by the lack of lubricants. Without the lubricants, it was found that the preforms were not as stable when pressed at low pressures and that pressure had to be significantly increased to maintain preform integrity and that the parts had to be press cured for longer. It is believed that the presence of lubricants is not only important to the frictional wear properties of the brake pads once manufactured, but also during the preform and pressing stage as the compacting of the ingredients may be influenced by the presence of lubricant materials.

### EXAMPLE 7 (not according to the invention)

| | |
|---|---|
| Binder | 21 |
| Fiber | 7 |
| Lubricant | 6 |
| Total Abrasives | 15 |
| Fillers | 51 |
| Copper and Copper alloys | 0 |
| Titanates | 0 |
| Total | 100 |

In Example 7, the amount of lubricant was increased to 6% by volume. The increase in lubricants was found to require significantly increased pressing and longer cure times in comparison to Example 1. The extremely high level of lubricants influenced the compacting of the ingredients during the preforming stage while the remaining performance characteristics were good. For efficient manufacturing purposes, the material should have less than 6% by volume of the lubricant of the total composition, and preferably under 4% by volume of the total friction material composition. In accordance with the invention, the material should have no more than 4% by volume of the total friction material composition. Also, as lubricants are expensive, when combined with the difficulties in processing, it is desirable to minimize the amount of lubricants added. Therefore, at least some lubricant that allows for better pressing is desirable.

### EXAMPLE 8 (not according to the invention)

| | |
|---|---|
| Binder | 21 |
| Fiber | 7 |
| Lubricant | 4 |
| Total Abrasives | 9 |
| Fillers | 59 |
| Copper and Copper alloys | 0 |
| Titanates | 0 |
| Total | 100 |

The friction material formed in Example 8 had the lowest levels of abrasive material. The performance characteristics related to friction suffered, as the material had one of the lowest levels of friction coefficient measured among all variations of examples. However, it is believed that other parameters may be adjusted to keep the friction coefficient within the desirable range. Surprisingly, during the processing and formulation stage of the brake pad, the bonding to the back plate and in particular the bonding into the back bond retention plate at 300°C was also negatively affected. Therefore, it is believed that the total amount of abrasives should at least be greater than 9% by volume of the total composition.

### EXAMPLE 9 (not according to the invention)

| | |
|---|---|
| Binder | 21 |
| Fiber | 7 |
| Lubricant | 4 |
| Total Abrasives | 22 |
| Fillers | 46 |
| Copper and Copper alloys | 0 |
| Titanates | 0 |
| Total | 100 |

The friction material of Example 9 increased the level of abrasive material to 22%. The preforming and performance characteristics were good. The formulation processed fairly well with an ease of mixing, preforming and press cycle operations. The hardness of the pads was one of the highest of the materials tested in the Examples. One downside to using such high level abrasives is cost. It is believed that a friction material having approximately 22% or less abrasives is preferred to minimize the cost even though the friction material may have otherwise acceptable performance and processing characteristics.

The foregoing description discloses exemplary embodiments of the present invention. One skilled in the art will readily recognize from this description, and from the accompanying drawings and claims that various changes, modifications and variations can be made without departing from the scope of the invention as defined by the claims.

## Claims

1. A friction material for a brake consisting of, in percent (%) by volume of said friction material:
a binder forming 15% - 24% by volume, wherein the binder is selected from at least one phenolic resin;
a fiber forming 3% - 13% by volume, wherein the fiber is chosen from a group of aramid, polyacrylonitrile (PAN) and cellulose fibers;
at least one lubricant forming less than or equal to 4% by volume, said lubricant including at least one metal sulfide, the metal sulfide is selected from at least one of tin sulfides, antimony trisulfide, zinc sulfide, copper sulfide, iron sulfides, wherein said lubricant may further comprise one or more of the group consisting of antimony trioxide, phthalocyanine, tin powder, and zinc powder;
abrasives forming 9% - 22% by volume, wherein said abrasives include 3-14% by volume of said material hard abrasives and 3-14% mild abrasives, and wherein said abrasives are selected from the group consisting of hard mineral fibers, zirconia, zircon, zirconium silicate, mica, alumina, ceramic fibers, calcium magnesium silicate, calcium magnesium zirconium silicate, calcium magnesium aluminum silicate, magnesium aluminum silicate, silica, silicon dioxide, sand, silicon carbide, iron oxide and magnesium oxide;
other materials, namely fillers and/or modifiers forming 46% - 64% by volume and including, as a filler, a rubber powder, further comprising at least one of the group consisting of lime, calcium oxide, talc, calcium carbonate, barites, carbons such as graphite and petroleum coke, recycled rubber crumbs, and friction dust;
and wherein said material is free of titanates and copper.

2. The friction material of claim 1, wherein said abrasives includes less than 10% magnesium oxide.

3. The friction material of claim 1, wherein said filler consists essentially of a mixture of said rubber powder, lime, barium sulfate, graphite, petroleum coke, and friction dusts.

4. The friction material of claim 1, wherein the material does not include copper, brass, bronze, potassium titanate, lithium titanate, and magnesium titanate.

5. A brake pad comprising
a backing plate; and
a friction pad fixed to the backing plate and fabricated of a friction material as defined in any preceding claim.

## Patentansprüche

1. Reibungsmaterial für eine Bremse, bestehend aus, in Volumenprozent (Volumen-%) des Reibungsmaterials:
einem Bindemittel, das 15 Volumen-% - 24 Volumen-% bildet, wobei das Bindemittel aus zumindest einem Phenolharz ausgewählt ist;
einer Faser, die 3 Volumen-% - 13 Volumen-% bildet, wobei die Faser aus einer Gruppe aus Aramid, Polyacrylonitril (PAN) und Cellulosefasern ausgewählt ist;
zumindest einem Schmiermittel, das weniger als oder gleich 4 Volumen-% bildet, wobei das Schmiermittel zumindest ein Metallsulfid beinhaltet, wobei das Metallsulfid aus zumindest einem von Zinnsulfiden, Antimontrisulfid, Zinksulfid, Kupfersulfid, Eisensulfiden ausgewählt ist, wobei das Schmiermittel ferner eines oder mehrere aus der Gruppe umfassen kann, die aus Antimontrioxid, Phthalocyanin, Zinnpulver und Zinkpulver besteht;
Abrasivstoffen, die 9 Volumen-% - 22 Volumen-% bilden, wobei die Abrasivstoffe 3 Volumen-% - 14 Volumen-% des Materials harte Abrasivstoffe und 3 Volumen-% - 14 Volumen% milde Abrasivstoffe beinhalten, und wobei die Abrasivstoffe aus der Gruppe ausgewählt sind, die aus Hartmineralfasern, Zirkoniumdioxid, Zirkon, Zirkoniumsilikat, Glimmer, Aluminiumoxid, Keramikfasern, Calciummagnesiumsilikat, Calciummagnesiumzirkoniumsilikat, Calciummagnesiumaluminiumsilikat, Magnesiumaluminiumsilikat, Kieselsäure, Siliziumdioxid, Sand, Siliziumkarbid, Eisenoxid und Magnesiumoxid besteht;
anderen Materialien, nämlich Füllstoffen und/oder Modifikatoren, die 46 Volumen-% - 64 Volumen-% bilden und als Füllstoff ein Kautschukpulver beinhalten, ferner umfassend zumindest eines aus der Gruppe, die aus Kalk, Calciumoxid, Talk, Calciumcarbonat, Baryten, Kohlenstoffen wie zum Beispiel Graphit und Petrolkoks, recycelten Kautschukkrümeln und Reibungsstaub besteht;
und wobei das Material frei von Titanaten und Kupfer ist.

2. Reibungsmaterial nach Anspruch 1, wobei die Abrasivstoffe weniger als 10 % Magnesiumoxid beinhalten.

3. Reibungsmaterial nach Anspruch 1, wobei der Füllstoff im Wesentlichen aus einer Mischung aus dem Kautschukpulver, Kalk, Bariumsulfat, Graphit, Petrolkoks und Reibungsstaub besteht.

4. Reibungsmaterial nach Anspruch 1, wobei das Material nicht Kupfer, Messing, Bronze, Kaliumtitanat, Lithiumtitanat, Magnesiumtitanat und Stahlfasern beinhaltet.

5. Bremsbelag, umfassend
eine Trägerplatte; und
einen Reibungsbelag, der an der Trägerplatte befestigt und aus einem Reibungsmaterial nach einem vorhergehenden Anspruch hergestellt ist.

## Revendications

1. Matériau de frottement pour frein se composant de, en pour cent (%) en volume dudit matériau de frottement :
un liant constituant 15 % à 24 % en volume, ledit liant étant choisi parmi au moins une résine phénolique ;
une fibre constituant 3 % à 13 % en volume, ladite fibre étant choisie dans le groupe des fibres d'aramide, de polyacrylonitrile (PAN) et de cellulose ;
au moins un lubrifiant constituant 4 % ou moins en volume, ledit lubrifiant comportant au moins un sulfure de métal, le sulfure de métal étant choisi parmi au moins l'un des sulfures d'étain, du trisulfure d'antimoine, du sulfure de zinc, du sulfure de cuivre, des sulfures de fer, ledit lubrifiant pouvant en outre comprendre un ou plusieurs composés du groupe constitué par le trioxyde d'antimoine, la phtalocyanine, la poudre d'étain, et la poudre de zinc ;
des abrasifs constituant 9 % à 22 % en volume, lesdits abrasifs comportant 3 à 14 % en volume desdits abrasifs durs de matériau et 3 à 14 % d'abrasifs doux, et lesdits abrasifs étant choisis dans le groupe constitué par les fibres minérales dures, la zircone, le zircon, le silicate de zirconium, le mica, l'alumine, les fibres céramiques, le silicate de calcium-magnésium, le silicate de calcium-magnésium-zirconium, le silicate de calcium-magnésium-aluminium, le silicate de magnésium-aluminium, la silice, le dioxyde de silicium, le sable, le carbure de silicium, l'oxyde de fer et l'oxyde de magnésium ;
d'autres matériaux, à savoir des charges et/ou des agents modificateurs constituant 46 % à 64 % en volume et comportant, en tant que charge, une poudre de caoutchouc, comprenant en outre au moins un composé dans le groupe constitué par la chaux, l'oxyde de calcium, le talc, le carbonate de calcium, les barytes, les carbones tels que le graphite et le coke de pétrole, les granules de caoutchouc recyclés, et les poussières de frottement ;
et ledit matériau étant exempt de titanates et de cuivre.

2. Matériau de frottement selon la revendication 1, lesdits abrasifs comportant moins de 10 % d'oxyde de magnésium.

3. Matériau de frottement selon la revendication 1, ladite charge se composant principalement d'un mélange de ladite poudre de caoutchouc, ladite chaux, ledit sulfate de baryum, ledit graphite, ledit coke de pétrole et lesdites poussières de frottement.

4. Matériau de frottement selon la revendication 1, ledit matériau ne comportant pas de cuivre, de laiton, de bronze, de titanate de potassium, de titanate de lithium, de titanate de magnésium.

5. Plaquette de frein comprenant :
une plaque de support ; et
une plaquette de frottement fixée sur la plaque de support et constituée d'un matériau de frottement tel que défini dans l'une quelconque des revendications précédentes.
